# EUROPÄISCHE PATENTSCHRIFT

(11) **EP 2 802 441 B1**
(45) Veröffentlichungstag und Bekanntmachung des Hinweises auf die Patenterteilung: **27.12.2017**
(21) Anmeldenummer: 13700289.5
(22) Anmeldetag: 10.01.2013
(51) Int. Cl.: B27M 1/08, B23Q 7/05, B23Q 17/22

(54) **HOLZBEARBEITUNGSANLAGE UND VERFAHREN ZU DEREN BETRIEB**
WOOD-WORKING MACHINE AND METHOD FOR THE OPERATION THEREOF
INSTALLATION DE TRAITEMENT DU BOIS, ET PROCÉDÉ PERMETTANT DE FAIRE FONCTIONNER LADITE INSTALLATION DE TRAITEMENT DU BOIS

(30) Priorität: 14.01.2012 DE 102012000606
(43) Veröffentlichungstag der Anmeldung: 19.11.2014
(73) Patentinhaber: Hundegger, Hans, 87749 Hawangen (DE)
(72) Erfinder: Hundegger, Hans, 87749 Hawangen (DE)
(74) Vertreter: Charrier Rapp & Liebau
(86) Internationale Anmeldenummer: PCT/EP2013/050384
(87) Internationale Veröffentlichungsnummer: WO 2013/104706

(56) Entgegenhaltungen:
- EP-A1- 0 561 227
- EP-A1- 0 562 216
- EP-A1- 0 724 939
- EP-A2- 0 319 032
- EP-A2- 0 813 941
- EP-A2- 0 816 029
- EP-A2- 0 960 705
- EP-A2- 1 405 693
- WO-A1-84/00715
- DE-A1- 3 143 867
- DE-A1- 19 831 284
- DE-A1-102008 036 974
- DE-U1- 8 714 080
- DE-U1- 8 804 018
- DE-U1- 20 007 999
- DE-U1- 20 203 488
- US-A- 3 833 033

## Beschreibung

Die Erfindung betrifft eine Holzbearbeitungsanlage nach dem Oberbegriff des Anspruchs 1. Die Erfindung betrifft außerdem ein Verfahren zum Betrieb einer derartigen Holzbearbeitungsanlage. Eine solche Holzbearbeitungsanlage ist aus der DE 10 2008 036 974 A1 bekannt. Holzbearbeitungsanlagen für die Bearbeitung langer Werkstücke wie z.B. Balken, Bretter, Platten oder dgl. weisen üblicherweise ein oder mehrere Bearbeitungsaggregate, eine Werkstückauflage und eine Transporteinrichtung zur Verschiebung und Positionierung der auf der Werkstückauflage aufliegenden Werkstücke relativ zum Bearbeitungsaggregat in einer ersten Linearachse auf. Die Bewegung des Werkstücks zur genauen Positionierung des Werkstücks wird bei den bekannten Holzbearbeitungsanlagen z.B. durch eine in Zuführrichtung des Werkstücks vor dem Bearbeitungsaggregat angeordnete Messwalze erfasst.

Aufgabe der Erfindung ist es, eine Holzbearbeitungsanlage und ein Verfahren zum Betrieb einer solchen Holzbearbeitungsanlage zu schaffen, die eine genauere Erfassung und Steuerung der Werkstückbewegung und dadurch eine präzisere Bearbeitung ermöglichen.

Diese Aufgabe wird durch eine Holzbearbeitungsanlage mit den Merkmalen des Anspruchs 1 und durch ein Verfahren mit den Merkmalen des Anspruchs 7 gelöst. Zweckmäßige Weiterbildungen und vorteilhafte Ausgestaltungen der Erfindung sind in den Unteransprüchen angegeben.

Die erfindungsgemäße Holzbearbeitungsanlage weist eine vordere Transporteinheit an einem in Zuführrichtung eines Werkstücks vor dem Bearbeitungsaggregat angeordneten vorderen Auflagebereich und eine hintere Transporteinheit an einem in Zuführrichtung des Werkstücks hinter dem Bearbeitungsaggregat angeordneten hinteren Auflagebereich zur Verschiebung und Positionierung des Werkstücks in einer ersten Linearachse auf, wobei jeder Transporteinheit ein in den vorderen bzw. hinteren Auflagebereich integriertes Meßsystem zur Erfassung der Bewegung des Werkstücks in der ersten Linearachse zugeordnet ist. Durch die in den vorderen und hinteren Auflagebereich integrierten Meßsysteme kann die Bewegung des auf der Auflage liegenden Werkstücks während einer Bearbeitung auf der gesamten Länge immer durch mindestens ein Meßsystem erfasst und dadurch die Transporteinrichtung zur genauen Positionierung des Werkstücks gegenüber dem Bearbeitungsaggregat gesteuert werden. So kann z.B. ein nur noch auf dem hinteren Auflagebereich aufliegendes Werkstück auch noch an einer hinteren Stirnseite gesteuert bearbeitet werden, während bereits ein neues Werkstück zur anschließenden Bearbeitung im vorderen Auflagebereich herantransportiert wird. Je nach Erfordernissen kann zur gesteuerten Positionierung des Werkstücks auch von einem auf das andere Meßsystem umgeschaltet werden. Wenn das Werkstück auf beiden Auflagebereichen aufliegt können auch beide Meßsysteme zu Einsatz gelangen, wobei die Messwerte verrechnet oder zur Kontrolle verglichen werden können. Dadurch ist eine redundante und genauere Messung zur Verbesserung der Bearbeitungsgenauigkeit erreichbar. Auch wenn ein längeres Bauteil in der Mitte getrennt wird, können die beiden dadurch entstehenden Bauteile unabhängig voneinander weiter bearbeitet, transportiert und vermessen werden.

In einer besonders zweckmäßigen Ausführung kann der vordere und/oder hintere Auflagebereich mit dem jeweiligen Meßsystem gegenüber dem Bearbeitungsaggregat bewegbar bzw. positionierbar sein. Dadurch kann die für die jeweilige Bearbeitungsaufgabe bzw. das Werkzeug erforderliche Lücke zwischen dem vorderen und hinteren Auflagebereich möglichst klein gehalten werden. Die Auflagebereiche können so zusammen mit den Transporteinrichtungen und den Meßsystemen optimal positioniert und koordiniert bewegt werden. Erfindungsgemäß weisen die Meßsysteme einen an die Unterseite des Werkstücks anpressbaren Messriemen bzw. einer Messkette zur Mitnahme durch das Werkstück auf. Der Messriemen kann z.B. vorzugsweise durch mit dem Messriemen mitbewegte Andruckelemente an das Werkstück angepresst werden. Dadurch kann eine schlupffreie Verbindung zwischen dem Messriemen bzw. der Messkette und dem Werkstück erreicht werden, ohne dass eine Gleitreibung zwischen Andruckelement und dem Messriemen bzw. der Messkette auftritt. Dadurch kann die Bewegung des Werkstücks genau und schlupffrei ermittelt werden.

Zweckmäßigerweise sind an dem in Zuführrichtung des Werkstücks vorderen Auflagebereich mindestens ein Werkstückerkennungssensor zur Steuerung der vorderen Transporteinheit und eine Nullsetzlichtschranke angeordnet. Über die Werkstückerkennungssensoren kann z.B. das Absenken der Transportrollen auf das Werkstück gesteuert werden.

Bei der erfindungsgemäßen Holzbearbeitungsanlage wird die Bewegung des Werkstücks während der Bearbeitung durch das Bearbeitungsaggregat durch mindestens eines der in den vorderen bzw. hinteren Auflagebereich integrierten Meßsysteme oder durch beide Meßsysteme erfasst. Die Mess- und Transportsysteme können sich in der Weise abwechseln oder ergänzen, dass immer die optimale Position zum Werkstück erreicht wird. Die Reihenfolge oder Auswahl kann sich nach den Bearbeitungen und der Beschaffenheit des Werkstücks richten.

Weitere Besonderheiten und Vorzüge der Erfindung ergeben sich aus der folgenden Beschreibung eines bevorzugten Ausführungsbeispiels anhand der Zeichnung. Es zeigen:
- **Figur 1**: eine schematische Darstellung einer Holzbearbeitungsanlage in einer Draufsicht und
- **Figur 2**: eine Seitenansicht der Holzbearbeitungsanlage in einem Schnitt A-A von Figur 1.

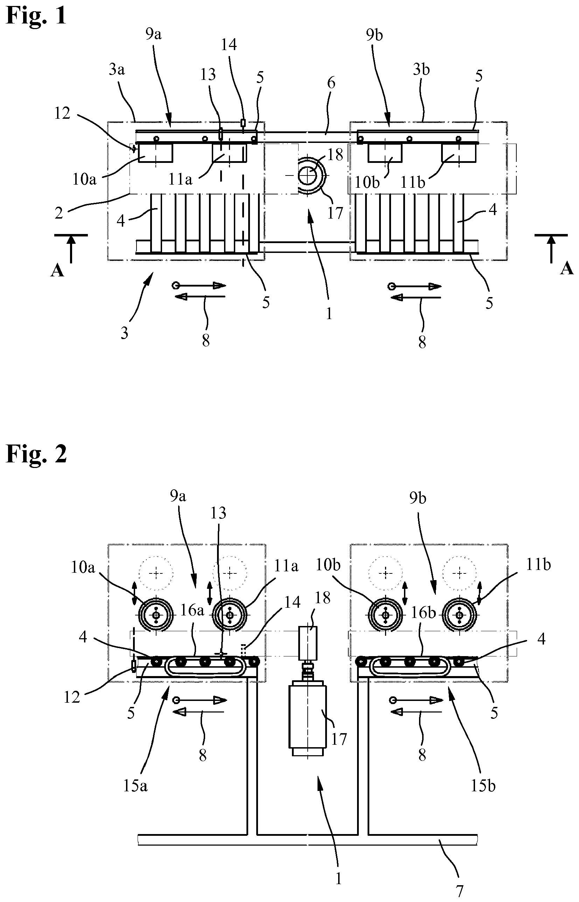

Die in den Figuren 1 und 2 in einer Draufsicht und einer Seitenansicht im Schnitt schematisch dargestellte Holzbearbeitungsanlage enthält mindestens ein Bearbeitungsaggregat 1, das zwischen einem in Zuführrichtung eines Werkstücks 2 vor dem Bearbeitungsaggregat liegenden vorderen Auflagebereich 3a und einem in Zuführrichtung des Werkstücks 2 hinter dem Bearbeitungsaggregat liegenden hinteren Auflagebereich 3b einer Werkstückauflage 3 angeordnet ist. Die Werkstückauflage 3 ist bei der gezeigten Ausführung als Rollenbahn ausgeführt, bei der in an sich bekannter Weise eine Vielzahl hintereinander angeordneter Transportrollen 4 zwischen parallelen Schienen 5 drehbar gelagert sind. Die Schienen 5 und ein Anschlaglineal 6 zur seitlichen Anlage des auf den Transportrollen 4 aufliegenden Werkstücks 2 sind an einem z.B. als Schweißkonstruktion ausgeführten Gestell 7 angeordnet. Bei der gezeigten Ausführung sind die vorderen und hinteren Auflagebereiche 3a und 3b in Richtung der Pfeile 8 horizontal bewegbar bzw. positionierbar an dem Gestell 7 angebracht, so dass die Lücke zwischen dem vorderen und hinteren Auflagebereich 3a bzw. 3b in Abhängigkeit von der jeweiligen Bearbeitung möglichst klein gehalten und die Werkstückauflage möglichst nahe an der Bearbeitungsstelle erfolgen kann.

Die Holzbearbeitungsanlage enthält ferner eine Transporteinrichtung 9, mit der das auf den Transportrollen 4 aufliegende Werkstück 2 relativ zum Bearbeitungsaggregat 1 in einer ersten Linearachse (X-Achse) horizontal entlang des Anschlaglineals 6 verschoben werden kann. Die Transporteinrichtung 9 besteht bei der gezeigten Ausführung aus zwei separaten und getrennt ansteuerbaren Transporteinheiten 9a und 9b, die jeweils dem vorderen und hinteren Auflagebereich 2a und 2b zugeordnet sind. Die vordere Transporteinheit 9a ist in Zuführungsrichtung des Werkstücks 2 gesehen vor dem Bearbeitungsaggregat 1 angeordnet, während die hintere Transporteinheit 9b dem Bearbeitungsaggregat 1 nachgeordnet ist. Jede Transporteinheit 9a und 9b enthält zwei Transportrollen 10a, 11a und 10b, 11b die durch nicht dargestellte Motoren angetrieben und zum Absenken auf das Werkstück 2 bzw. zum Anheben vom Werkstück 2 in Vertikalrichtung separat verstellbar sind. Die Transportrollen 10a, 11a, 10b und 11b können eine Oberfläche aus einem Material mit hoher Reibung aufweisen, so dass zwischen den Transportrollen 10a, 11a, 10b und 11b und dem Werkstück 2 bei dessen Transport möglichst kein Schlupf auftritt. Zum Absenken auf das Werkstück bzw. zum Anheben von dem Werkstück 2 können die Transportrollen 10a, 11a und 10b, 11b z.B. an schwenkbaren Armen oder an Vertikalführungen angeordnet sein.

An der in den Figuren 1 und 2 links dargestellten, vorderen Transporteinheit 9a sind zwei Werkstückerkennungssensoren 12 und 13 angebracht. Der in Zuführungsrichtung des Werkstücks 2 gesehen vorderen Transportrolle 10a ist ein erster Werkstückerkennungssensor 12 vorgeordnet. Zwischen der vorderen Transportrolle 10a und der hinteren Transportrolle 11a der in Zuführungsrichtung des Werkstücks 2 gesehen vorderen Transporteinheit 9a ist ein zweiter Werkstückerkennungssensor 13 angeordnet. Außerdem ist an der vorderen Transporteinheit 9a eine Nullsetzlichtschranke 14 angebracht.

Dem vorderen und hinteren Auflagebereich 3a und 3b ist außerdem jeweils ein Meßsystem 15a bzw. 15b zur Erfassung der Bewegung des Werkstücks 2 zugeordnet. Das Meßsystem besteht bei der gezeigten Ausführung aus einem Messriemen 16a bzw. 16b, der durch mit dem Messriemen 16a und 16b mitbewegte Andruckelemente an die Unterseite des Werkstücks 2 angepresst und über nicht dargestellte Umlenkrollen geführt wird. Durch Erfassung der Drehbewegung einer Umlenkrolle kann z.B. die Bewegung des Messriemens und dadurch die Bewegung des Werkstücks ermittelt werden. Dadurch dass sich die Andruckelemente mit dem Messriemen 16a bzw. 16b mitbewegen, kann dieser zur Erzielung einer schlupffreien Verbindung an das Werkstück 2 angedrückt werden, ohne dass eine Gleitreibung zwischen Andruckelement und dem Messriemen auftritt. Dadurch kann z.B. die Bewegung eines Werkstücks 2 genau und schlupffrei ermittelt werden.

Die zum Andrücken des Messriemens 16a und 16b an die Unterseite des Werkstücks 2 bestimmten Andruckelemente können z.B. zu einer Endloskette miteinander verbunden und über mindestens zwei Kettenumlenkräder geführt sein. Zweckmäßigerweise sind die beiden in einer Ebene liegenden Kettenumlenkräder in einer Ebene zwischen zwei oberen Umlenkscheiben des Messriemens derart angeordnet, dass die Andruckelemente zur Anlage an der Innenseite des zwischen den beiden Umlenkscheiben verlaufenden Trums des Messriemens 16a und 16b gelangen.

Das zwischen dem vorderen Auflagebereich 3a und dem hinteren Auflagebereich 3b angeordnete Bearbeitungsaggregat 1 weist eine in zwei zueinander rechtwinkligen Linearachsen verfahrbare und um drei Drehachsen schwenkbare Bearbeitungseinheit 17 zur Aufnahme mindestens eines Bearbeitungswerkzeugs 18 auf. Durch diese Bewegungsmöglichkeiten kann z.B. eine mit einem Fräs-, Bohr- oder einem anderen Bearbeitungswerkzeug versehene Bearbeitungseinheit 17 zu allen Seiten des Werkstücks 2 verfahren und derart verschwenkt werden, dass das Bearbeitungswerkzeug 18 auch senkrecht oder in beliebigen Winkeln zu den jeweiligen Seiten steht bzw. zu allen Seiten gelangen kann. Dadurch können an den Ober- und Unterseiten, den Vorder- und Hinterseiten sowie an beiden Stirnseiten eines Werkstücks 2 z.B. Nuten, Bohrungen oder andere Vertiefungen ohne Umkanten des Werkstücks hergestellt werden. So kann auf einfache und schnelle Weise eine 6-Seiten-Bearbeitung der Werkstücke mit einer Vielzahl von Bearbeitungsmöglichkeiten bei maximaler Flexibilität erfolgen.

In einer besonders zweckmäßigen Ausführung weist das Bearbeitungsaggregat einen Träger auf, der in einer zur ersten Linearachse (X-Achse) rechtwinkligen zweiten Linearachse (Y-Achse) und einer dazu rechtwinkligen dritten Linearachse (Z-Achse) verfahrbar ist. An dem Träger ist die Bearbeitungseinheit 17 um drei Drehachsen (A-Achse, B-Achse, C-Achse) schwenkbar angeordnet ist. Der Träger ist zweckmäßigerweise als horizontaler Querträger ausgebildet, kann aber auch vertikal angeordnet sein.

Die Betriebsweise der vorstehend beschriebenen Holzbearbeitungsanlage ist wie folgt:
Wenn der erste Werkstückerkennungssensor 12 ein entweder automatisch oder manuell zugeführtes Werkstück erkennt, wird die erste Transportrolle 10a der in Zuführrichtung vorderen Transporteinheit 9a auf das Werkstück abgesenkt, so dass die erste Transportrolle 10a das Werkstück entlang des Anschlaglineals 6 in der ersten Linearachse (X-Achse) in Richtung des Bearbeitungsaggregats 1 verfährt. Wenn das durch die erste Transportrolle 10a transportierte Werkstück 2 in den Bereich des Messriemens 16a gelangt, wird die Bewegung des Werkstücks 2 durch das vordere Meßsystem 15a erfasst. Sobald der im Bereich des Meßsystems 15a angeordnete zweite Werkstückerkennungssensor das Werkstück 2 erfasst, wird die zweite Transportrolle 11a auf das Werkstück abgesenkt und übernimmt den Transport des Werkstücks 2. Die erste Transportrolle 10a kann dann entweder vom Werkstück 2 abheben oder beide Transportrollen können das Werkstück 2 synchron fördern.

Wenn das Werkstück 2 die Nullsetzlichtschranke 14 passiert, wird die Werkstückvorderkante erkannt und die Steuerung für die anschließende Bearbeitung kann entsprechend synchronisiert (auf Null gesetzt) werden. Die exakte Bauteilvorderkante kann auch durch eine erste Stirnbearbeitung präzise gesetzt werden.

Gelangt das Werkstück 2 bei seinem weiteren Transport in den Bereich des Messriemens 16b am hinteren Meßsystem 15b, kann das zweite Meßsystem die Erfassung der Bewegung des Werkstücks übernehmen. Solange das Werkstück 2 noch in Kontakt mit beiden Messriemen 16a und 16b steht, können die Messwerte beider Meßsysteme 15a und 15b verrechnet oder kontrolliert werden, wodurch ein redundantes und genaueres Meßsystem mit erhöhter Bearbeitungsgenauigkeit erreicht werden kann. Im weiteren Verlauf der Bearbeitung können sich die verschiedenen Transportsysteme 9a und 9b und die Meßsysteme 15a und 15b in der Art abwechseln, dass immer die optimale Position auf das Werkstück 2 erreicht wird. Die Reihenfolge kann sich nach den Bearbeitungen und der Beschaffenheit des Werkstücks 2 richten.

## Patentansprüche

1. Holzbearbeitungsanlage, die mindestens ein Bearbeitungsaggregat (1), eine Werkstückauflage (3) mit mindestens einem in Zuführrichtung eines Werkstücks (2) vor dem Bearbeitungsaggregat (1) angeordneten vorderen Auflagebereich (3a) und einem in Zuführrichtung des Werkstücks (2) hinter dem Bearbeitungsaggregat (1) angeordneten hinteren Auflagebereich (3a) und eine Transporteinrichtung mit einer am vorderen Auflagebereich (3a) angeordneten vorderen Transporteinheit (9a) und einer am hinteren Auflagebereich (3b) angeordneten hinteren Transporteinheit (9b) zur Verschiebung und Positionierung des auf der Werkstückauflage (3) aufliegenden Werkstücks in einer ersten Linearachse (X-Achse) enthält, **dadurch gekennzeichnet, dass** die vordere und hintere Transporteinheit (9a, 9b) zwei in Vertikalrichtung separat verstellbare und gegen die Oberseite des Werkstücks (2) anstellbare Transportrollen (10a, 11a, 10b 11b) umfassen und wobei jeder Transporteinheit (9a, 9b) ein in den vorderen bzw. hinteren Auflagebereich (3a, 3b) integriertes Meßsystem (15a, 15b) mit einem an die Unterseite des Werkstücks (2) anpressbaren Messriemen bzw. einer Messkette (16a, 16b) zur Erfassung der Bewegung des Werkstücks (2) in der ersten Linearachse (X-Achse) zugeordnet ist.

2. Holzbearbeitungsanlage nach Anspruch 1, **dadurch gekennzeichnet, dass** der vordere und/oder hintere Auflagebereich (3a, 3b) mit dem jeweiligen Meßsystem (15a, 15b) gegenüber dem Bearbeitungsaggregat (1) bewegbar- bzw. positionierbar ist.

3. Holzbearbeitungsanlage nach Anspruch 1 oder 2, **dadurch gekennzeichnet, dass** die vordere und hintere Transporteinheit (9a, 9b) getrennt ansteuerbar sind.

4. Holzbearbeitungsanlage nach einem der Ansprüche 1 bis 3, **dadurch gekennzeichnet, dass** die vordere und hintere Transporteinheit (9a, 9b) jeweils eine vordere und hintere Transportrolle (10a, 11a, 10b, 11b) enthalten.

5. Holzbearbeitungsanlage nach einem der Ansprüche 1 bis 4, **dadurch gekennzeichnet, dass** an dem in Zuführrichtung des Werkstücks (2) vorderen Auflagebereich (3a) mindestens ein Werkstückerkennungssensor (12, 13) zur Steuerung der vorderen Transporteinheit (9a) angeordnet ist.

6. Holzbearbeitungsanlage nach einem der Ansprüche 1 bis 5, **dadurch gekennzeichnet, dass** an dem in Zuführrichtung des Werkstücks (2) vorderen Auflagebereich (3a) eine Nullsetzlichtschranke (14) angeordnet ist.

7. Verfahren zum Betrieb einer Holzbearbeitungsanlage nach einem der Ansprüche 1 bis 6, **dadurch gekennzeichnet, dass** die Bewegung des Werkstücks (2) während der Bearbeitung durch das Bearbeitungsaggregat (1) durch mindestens eines der in den vorderen bzw. hinteren Auflagebereich (3a, 3b) integrierten Meßsysteme (15a, 15b) oder durch beide Meßsysteme (15a, 15b) erfasst wird.

## Claims

1. Wood-working machine, which contains at least one processing unit (1), a workpiece support (3) with at least one front support area (3a) situated in front of the processing unit (1) in the feed direction of a workpiece (2) and a rear support area (3b) situated behind the processing unit (1) in the feed direction of the workpiece (2), and a transporting device with a front transporting unit (9a), situated on the front support area (3a), and a rear transporting unit (9b), situated on the rear support area (3b), for the moving and positioning of workpiece lying on the workpiece support (3) in a first linear axis (X axis), **characterized in that** the front and rear transporting units (9a, 9b) comprise two transporting rollers (10a, 11a, 10b, 11b), which can be adjusted separately in a vertical direction with respect to the top side of the workpiece (2), and wherein a measuring system (15a, 15b), which is integrated into the front or rear support areas (3a, 3b), with a measuring belt or a measuring chain (16a, 16b), which is pressed on the bottom side of the workpiece (2), for the detection of the movement of the workpiece (2) in the first linear axis (X axis), is associated with each transporting unit (9a, 9b).

2. Wood-working machine according to Claim 1, **characterized in that** the front and/or rear support areas (3a, 3b) with the individual measuring system (15a, 15b) can be moved and can be positioned with respect to the processing unit (1).

3. Wood-working machine according to Claim 1 or 2, **characterized in that** the front and rear transporting units (9a, 9b) can be controlled separately.

4. Wood-working machine according to one of Claims 1-3, **characterized in that** each of the front and rear transporting units (9a, 9b) contain a front and a rear transport roller (10a, 11a, 10b, 11b).

5. Wood-working machine according to one of Claims 1-4, **characterized in that** at least one workpiece detection sensor (12, 13) for the control of the front transporting unit (9a) is situated on the front support area (3a) in the feed direction of the workpiece (2).

6. Wood-working machine according to one of Claims 1-5, **characterized in that** a zero setting photoelectric barrier (14) is situated on the front support area (3a) in the feed direction of the workpiece (2).

7. Method for the operation of a wood-working machine according to one of Claims 1-6, **characterized in that** the movement of the workpiece (2) is detected during the processing by the processing unit (1) by at least one of the measuring systems (15a, 15b) integrated into the front or rear support areas (3a, 3b), or by both measuring systems (15a, 15b).

## Revendications

1. Installation de traitement du bois qui contient au moins un groupe de traitement (1), un support de pièce (3) avec au moins une zone de support (3a) avant agencée dans le sens d'alimentation d'une pièce (2) avant le groupe de traitement (1) et une zone de support (3a) arrière agencée dans le sens d'alimentation de la pièce (2) derrière le groupe de traitement (1) et un dispositif de transport avec une unité de transport avant (9a) agencée au niveau de la zone de support (3a) avant et une unité de transport arrière (9b) agencée au niveau de la zone de support (3b) arrière pour le déplacement et le positionnement de la pièce reposant sur le support de pièce (3) dans un premier axe linéaire (axe X), **caractérisée en ce que** les unités de transport avant et arrière (9a, 9b) comprennent deux rouleaux de transport (10a, 11a, 10b, 11b) réglables séparément dans le sens vertical et applicables contre le côté supérieur de la pièce (2), et dans laquelle à chaque unité de transport (9a, 9b) est associé un système de mesure (15a, 15b) intégré dans la zone de support (3a, 3b) avant ou arrière avec une courroie de mesure pouvant être pressée contre le côté inférieur de la pièce (2) ou une chaîne de mesure (16a, 16b) pour la détection du mouvement de la pièce (2) dans le premier axe linéaire (axe X).

2. Installation de traitement du bois selon la revendication 1, **caractérisée en ce que** la zone de support (3a, 3b) avant et/ou arrière peut être déplacée ou positionnée avec le système de mesure (15a, 15b) respectif par rapport au groupe de traitement (1).

3. Installation de traitement du bois selon la revendication 1 ou 2, **caractérisée en ce que** les unités de transport avant et arrière (9a, 9b) sont commandables séparément.

4. Installation de traitement du bois selon l'une des revendications 1 à 3, **caractérisée en ce que** les unités de transport avant et arrière (9a, 9b) contiennent respectivement un rouleau de transport avant et arrière (10a, 11a, 10b, 11b).

5. Installation de traitement du bois selon l'une des revendications 1 à 4, **caractérisée en ce qu'**au moins un capteur de reconnaissance de pièce (12, 13) est agencé pour la commande de l'unité de transport avant (9a) au niveau de la zone de support (3a) avant dans le sens d'alimentation de la pièce (2).

6. Installation de traitement du bois selon l'une des revendications 1 à 5, **caractérisée en ce qu'**une barrière lumineuse de mise à zéro (14) est agencée au niveau de la zone de support (3a) avant dans le sens d'alimentation de la pièce (2).

7. Procédé de fonctionnement d'une installation de traitement du bois selon l'une des revendications 1 à 6, **caractérisée en ce que** le mouvement de la pièce (2) pendant le traitement par le groupe de traitement (1) est détecté par au moins un des systèmes de mesure (15a, 15b) intégré dans la zone de support (3a, 3b) avant ou arrière ou par les deux systèmes de mesure (15a, 15b).
